Europäisches Patentamt

European Patent Office

Office européen des brevets

Veröffentlichungsnummer: **0 298 274**

**A1**

(12) **EUROPÄISCHE PATENTANMELDUNG**

(21) Anmeldenummer: **88109283.7**

(22) Anmeldetag: **10.06.88**

(51) Int. Cl.⁴ **H01F 41/14 , H01L 21/70**

(30) Priorität: **26.06.87 DE 3721180**

(43) Veröffentlichungstag der Anmeldung:
**11.01.89 Patentblatt 89/02**

(84) Benannte Vertragsstaaten:
**DE FR GB IT NL**

(71) Anmelder: **Siemens Aktiengesellschaft Berlin und München**
**Wittelsbacherplatz 2**
**D-8000 München 2(DE)**

(72) Erfinder: **Scholz, Christian, Dr.-Ing.**
**Engertstrasse 6**
**D-8035 Stockdorf(DE)**
Erfinder: **Gulde, Peter, Dipl.-Phys.**
**Stephanstrasse 63**
**D-1000 Berlin(DE)**

(54) **Verfahren zum Strukturieren einer Kupfer- und/oder Permalloyschicht mittels Trockenätzen.**

㊐ In konventioneller Technik wird als Maske (3) eine Schicht aus Tantal auf die zu strukturierende Schicht (2, 2′) und auf diese eine Fotolackschicht (4) aufgebracht. Danach wird die auf fotolithografischem Wege erzeugte Struktur der Fotolackschicht (4) durch reaktives Ionenätzen auf die Maske (3) übertragen. Dieser Vorgang wird bis zum Freilegen der zu strukturierenden Kupfer- bzw. Permalloyschicht (2 bzw. 2′) fortgesetzt. Anschließend erfolgt das Strukturieren dieser letzteren Schicht mittels Ionenstrahlätzen.

FIG 1

FIG 2

FIG 3

EP 0 298 274 A1

## Verfahren zum Strukturieren einer Kupfer- und/oder Permalloyschicht mittels Trockenätzen

Die Erfindung bezieht sich auf ein Verfahren zum Strukturieren einer Kupfer- und/oder Permalloyschicht auf einer Substratoberfläche mittels Trockenätzen unter Verwendung einer metallischen, auf die zu strukturierende Schicht aufgebrachten Maske, die ihrerseits eine die Geometrie der Struktur wiedergebende Fotolackschicht trägt. Das Anwendungsgebiet eines derartigen Verfahrens ist allgemein die Herstellung von strukturierten Kupferschichten auf elektronischen Modulen, insbesondere ist es aber auch bei der Herstellung von Dünnfilm-Magnetköpfen einsetzbar.

Wegen der sehr guten elektrischen Leitfähigkeit wird Kupfer als Leiterzugmaterial bei der Herstellung von leitenden Verbindungen auf Modulsubstraten, Schaltkarten usw. in großem Umfang und in der Technologie für Dünnfilm-Magnetköpfe fast ausschließlich eingesetzt. Die leitenden Strukturen werden üblicherweise auf fotolithografischem Wege erzeugt. Dabei wird zunächst auf einer Kupferschicht, die auf einer Substratoberfläche aufgebracht ist, ein den gewünschten leitenden Verbindungen entsprechendes Muster einer Fotolackschicht erzeugt. Durch ein heute noch weitgehend naßchemisches Verfahren werden die nicht durch den Fotolack geschützten Kupferbereiche aus der Kupferschicht selektiv ausgeätzt, stehen bleibt dann auf der Substratoberfläche nur noch das Muster der leitenden Verbindungen.

Mit den bekannten naßchemischen Verfahren können jedoch steile Ätzflanken praktisch nicht erreicht werden. Mit fortschreitender Miniaturisierung elektronischer Schaltungen, aber auch bei gesteigerten Windungszahlen von Dünnfilm-Magnetköpfen wird es deshalb zunehmend schwieriger, auf naßchemischem Wege Leitermuster mit der gewünschten Genauigkeit zu erzeugen. Hinzukommt, daß aus den Ätzbädern selbst Verunreinigungen auf den zu ätzenden Teilen abgeschieden werden. Auch diese Verunreinigungen können wegen der zunehmenden Miniaturisierung immer weniger toleriert werden.

Eine andere Strukturierung bezieht sich deshalb auch auf ein naßchemisches Verfahren, bei dem zunächst eine Titanmaske erzeugt wird. Danach erst erfolgt die Erzeugung der eigentlichen Kupferstruktur in einem Ionenstrahl-Ätzprozeß. Aber auch bei dieser halb Naß-, halb Trockenstrukturierung sind die Nachteile des naßchemischen Verfahrens an der fertigen Kupferstruktur erkennbar.

Es hat deshalb nicht an Versuchen gefehlt, mit Hilfe von durchgängigen Trockenätzprozessen brauchbare Kupferstrukturen zu schaffen. So ist aus der Veröffentlichung "Surface texturing of copper by sputter etching with applications for solar selective absorbing surfaces" in Journal of Vacuum Science Technology Bd. 17 (6) Nov./Dez. 1980. S. 1170 ff. ein Versuch bekannt, Kupfer mittels Kathodenzerstäubung in einer Argonatmosphäre abzutragen. Auch aus der Druckschrift EP-A-0 133 621 ist ein Verfahren bekannt, bei dem Kupfer in einer Glimmentladung, die Verbindungen mit mindestens einer Methyl- odeer Methylengruppe enthält, trocken geätzt werden soll. Doch ist beim Ätzen mittels Kathodenzerstäubung besonders störend, daß das abgetragene Material auf den zu ätzenden Oberflächen teilweise wieder abgeschieden wird. Das Trockenätzen in einer Methylatmosphäre hat sich bisher noch nicht durchsetzen können.

Außerdem sind Versuche bekannt, Kupfer durch Plasmaätzen und durch reaktives Ionenätzen zu strukturieren. Als Ätzreagens werden dabei Halogenverbindungen eingesetzt. Bei Kupfer ergibt sich aber dabei die Schwierigkeit, daß seine Halogenverbindungen erst bei relativ hohen Temperaturen flüchtig werden. So beträgt die Flüchtigkeitstemperatur in einem Plasmaätzprozeß für Kupfer, bei dem das Ätzreagens aus Jod besteht, das mit Kupfer zusammen Kupferjodid bildet, $500^\circ$ C und mehr.

Weiterhin ist in der Druckschrift EP-A-0 054 663 ein Verfahren zum Ätzen von Kupfer mit Hilfe reaktiven Ionenätzens in einer Tetrachlorkohlenstoff und Alkohol enthaltenden Atmosphäre beschrieben. Bei diesem Prozeß degradieren jedoch die organischen Polymere, die als Masken benutzt werden.

Ähnliche Schwierigkeiten bereiten die bisher bekannten Verfahren zum Strukturieren von Permalloy, das insbesondere bei der Herstellung von Dünnfilm-Magnetköpfen verwendet wird. Hier werden vorrangig zwei Verfahren, ein naßchemisches Verfahren und ein Trockenstrukturierverfahren mit Hilfe von vier Masken angewendet. Das naßchemische Verfahren zum Strukturieren von Permalloy entspricht dem oben beschriebenen Verfahren zum Strukturieren von Kupfer. Mit Hilfe einer Fotolackmaske, die die darunterliegende Permalloyschicht schützt, werden in einem Ätzbad die ungeschützten Permalloyflächenbereiche weggeätzt. Der wesentliche Nachteil dieses Verfahrens liegt in der Unsauberkeit aller geätzten Kanten und der Winkligkeit, besonders bei dicken Strukturen von modernen Dünnfilm-Magnetköpfen liegt sie in der Größenordnung von weniger als $45^\circ$. Solche spitzen Kanten führen aber an dem fertigen Magnetkopf zu einem niedrigen Nebenspurdämpfungsmaß. Das ist darauf zurückzuführen, daß spitze Kanten wie Antennen auf magnetische Felder wirken und deshalb bei der Aufzeichnung und Wiedergabe von elektrischen Signalen auf magnetischen Platten eine hohe Störanfälligkeit ergeben.

Nun setzt sich der Trend nach höheren Speicherdichten auf magnetischen Platten aber weiter fort. Es werden immer schmalere Spuren auf die magnetischen Platten geschrieben, außerdem werden die Spuren selbst immer enger gesetzt. Darum wird es zunehmend wichtiger, hoher Flankensteilheit bei Permalloystrukturen zu erreichen.

Wie bei Kupferschichen hat man deshalb auch bei Permalloyschichten versucht, diese mit Hilfe von Trockenätzprozessen zu strukturieren. Gerade in der Magnetkopftechnologie bereitet dies aber große Schwierigkeiten, da die zu strukturierenden Permalloyschichten in diesem Anwendungsfall relativ dick ausgeführt werden müssen. Weiterhin ist das Verhältnis der Ätzraten von Permalloy zu konventionellen Fotolacken äußerst ungünstig. Aus diesem Grund sind Versuche zum Trockenätzen von Permalloy mit Hilfe einer unmittelbar auf das Permalloy auf fotolithografischem Wege aufgebrachten Fotolackstruktur gescheitert. Eine für die hohen Anforderungen noch befriedigende Strukturierung von Permalloy kann deshalb nur unter Verwendung von metallischen Hilfsmasken mit zufriedenstellendem Ergebnis durchgeführt werden. Als Material für diese Maske kommt beispielsweise Titan in Betracht. Nun hat aber dieses Material selbst wieder die Eigenschaft, daß es sich nicht direkt mit Hilfe einer auf fotolithografischem Wege erzeugten Fotolackstruktur strukturieren läßt. Als Ausweg bleibt nur, daß weitere Hilfsmasken verwendet werden, so daß schließlich doch die Struktur einer Fotolackschicht auf eine darunterliegende oberste Hilfsmaske übertragen werden kann. Stufenweise müssen dann die einzelnen Hilfsmasken von oben her abgebaut werden, um letztlich die Struktur in die über der Permalloyschicht liegende erste Maske einzuätzen und schließlich die Permalloyschicht selbst strukturieren zu können. Es ist unmittelbar einzusehen, daß die Fehlerhäufigkeit bei derartigen fortgesetzten Ätzprozessen enorm steigt. Außerdem tritt bei jedem Ätzprozeß eine Maßtoleranz auf, die in ihrer Kettung bei derartig vielen Prozeßschritten kaum noch ordentlich kontrollierbar ist. Schließlich ist ein derartig kompliziertes Verfahren auch äußerst unwirtschaftlich. Das Trokkenstrukturieren von Permalloyschichten ist daher bisher nicht befriedigend gelöst.

Die vorliegende Erfindung geht daher davon aus, daß naßchemische Verfahren den Anforderungen der fortschreitenden Entwicklung bei der Miniaturisierung von Kupferleiterzügen in elektronischen Schaltungen, sowie bei Dünnfilm-Magnetköpfen, aber auch von Permalloystrukturen bei diesen Köpfen mit extrem schmalen Systemhöhen bei relativ dicken Permalloyschichen nicht genügen Bisherige Lösungen für Trockenätzverfahren in diesem Anwendungsgebiet können alleine schon aus wirtschaftlichen Gründen nicht befriedigen und führen darüber hinaus in qualitativer Hinsicht auch nicht zu den gewünschten Ergebnissen.

Der vorliegenden Erfindung liegt daher die Aufgabe zugrunde, ein Verfahren der eingangs genannten Art zu schaffen, mit dem sich sowohl Kupfer als auch Permalloy mit hoher Maßgenauigkeit und möchlichst steilen Flanken ungeachtet dessen strukturieren läßt, daß in bestimmten Anwendungsfällen auch relativ hohe Schichtdichen gefordert werden.

Diese Aufgabe wird erfindungsgemäß in Verbindung mit einem Verfahren der eingangs genannten Art dadurch gelöst, daß als Maske eine Schicht aus Tantal auf die zu strukturierende Schicht aufgebracht wird, daß danach die Struktur der auf fotolithografischem Wege erzeugten Fotolackschicht durch reaktives Ionenätzen auf die Maske übertragen und dieser Vorgang bis zum Freilegen der zu strukturierenden Kupfer- bzw. Permalloyschicht fortgesetzt wird und daß das Strukturieren der letzteren Schicht mittels Ionenstrahlätzen erfolgt.

Ein wesentliches Merkmal der Erfindung besteht demnach darin, Tantal als Material für eine metallische Maske sowohl beim Strukturieren von Kupfer- als auch Permalloyschichten zu verwenden. Dieser Werkstoff besitzt, was für eine Maskenschicht immer zu fordern ist, eine ausreichende Haftfestigkeit gegenüber der zu strukturierenden Schicht aus Kupfer bzw. Permalloy und - noch wichtiger - läßt sich seinerseits selbst mit einer unmittelbar auf seiner Oberfläche auf fotolithografischem Wege aufgebrachten Fotolackstruktur gezielt und mit hoher Maßgenauigkeit mit Hilfe bekannter Einrichtungen trockenätzen. Insbesondere im Vergleich mit den vorgeschlagenen Versuchen zum Trockenätzen von Permalloyschichten hat die erfindungsgemäße Lösung damit den großen Vorteil, daß keine weiteren Hilfsmasken zum Übertragen einer Struktur der Fotolackschicht auf die eigentlich zu strukturierende Schicht notwendig sind. Damit verringert sich nicht nur die Zahl der Prozeßschritte wesentlich, sondern erhöht sich zugleich die bei dem entsprechenden Ätzpro zeß zu erzielende Maßgenauigkeit bei verringerter Fehlerhäufigkeit. Die Wirtschaftlichkeit des Herstellungsprozesses wird damit entscheidend verbessert.

Gemäß einer Weiterbildung der Erfindung wird die Dicke benachbarter Schichten jeweils entsprechend der Selektivität, d. h. dem Verhältnis der Ätzraten dieser benachbarten Schichten gewählt. Damit ist sichergestellt, daß der jeweilige Ätzprozeß zu Ende geführt werden kann, ohne daß dabei die übertragene Struktur in ihrer Geometrie Fehler erleidet.

Gemäß einer anderen Weiterbildung der Erfindung wird Schwefelhexafluorid als Gas beim reaktiven Ionenätzen verwendet. Dieses Gas hat den besonderen Vorteil, daß das hochreaktive Fluor in dem Plasmastrom in hoher Konzentration auftritt, so daß damit der Ätzprozeß in relativ kurzer Zeit durchgeführt werden kann.

Gemäß einer anderen Weiterbildung der Erfindung wird das reaktive Ionenätzen bei einem Grenzdruck durchgeführt, der mit einer Vorspannung der Ätzeinrichtung gekoppelt ist, die den Lackangriff, d. h. das Verhältnis von Restschichtdicke nach dem Ätzvorgang zu der ursprünglichen Schichtdicke des Fotolackes auf einen Wert begrenzt, der über 0,5 liegt und vorzugsweise 0,6 beträgt. Beim reaktiven Ionenätzen ist bekanntlich die sich einstellende Vorspannung der Ätzeinrichtung eine Funktion des gewählten Gasdruckes. Niedriger Gasdruck bewirkt eine hohe Vorspannung, die ihrerseits eine hohe Beschleunigung der Ionen im Plasma zur Folge hat. D. h. bei niedrigen Gasdrücken arbeitet eine reaktive Ionenätzanlage im wesentlichen auf physikalischer Basis. Diese Arbeitsweise greift aber den Fotolack sehr stark an. Analog hat ein hoher Gasdruck eine niedrige Vorspannung der Ionenätzanlage zur Folge, so daß bei hohen Gasdrücken chemisches Ätzen überwiegt. Mit chemischem Ätzen lassen sich aber die gewünschten Flankensteilheiten der übertragenen Strukturen nur unzureichend verwirklichen. Der gemäß der Weiterbildung der Erfindung definierte Grenzdruck legt eine Arbeitsweise der re aktiven Ionenätzanlage fest, bei der sowohl physikalisches als auch chemisches Ätzen mit etwa gleichem Gewicht auftreten. So wird einerseits eine unerwünscht hohe Belastung der Fotolackschicht vermieden, andererseits bleiben aber die unerwünschten Begleiterscheinungen von rein chemischem Ätzen noch beherrschbar.

Gemäß einer anderen Weiterbildung der Erfindung werden zum reaktiven Ionenätzen die übrigen Prozeßgrößen, nämlich die für die eingekoppelte Radiofrequenzleistung und die Durchflußmenge des Gases derart eingestellt, daß sich eine Ätzrate für die Maskenschicht einstellt, die der maximalen Ätzrate nahekommt.

Auf diese Weise wird die Ätzzeit optimiert, was für alle Trokkenätzprozesse von wesentlicher Bedeutung ist. Andere Weiterbildungen der Erfindung sind in übrigen Unteransprüchen gekennzeichnet und werden in einer nachfolgenden Beschreibung von Ausführungsbeispielen der Erfindung außerdem näher erläutert.

Bei der folgenden Beschreibung von Ausführungsbeispielen der Erfindung wird auf die Zeichnung Bezug genommen, dabei zeigt:

FIG 1 bis 3 modellhaft das Strukturieren einer Kupferschicht mit Hilfe einer Tantalmaske in aufeinanderfolgenden Prozeßschritten, wobei die Maskenstruktur durch reaktives Ionenätzen und die endgültige Struktur der Kupferschicht durch Ionenstrahlätzen geschaffen wird,

FIG 4 in einer Prinzipdarstellung eine Einrichtung zum reaktiven Ionenätzen,

FIG 5 bis 8 in verschiedenen Diagrammen qualitativ Kennlinien einzelner Betriebsparameter einer Ätzeinrichtung nach FIG 4,

FIG 9 in einer Prinzipdarstellung einer Einrichtung zum Ionenstrahlätzen und

FIG 10 bis 14 als weiteres Beispiel modellhaft das Strukturieren einer Permalloyschicht mit Hilfe einer Tantalmaske.

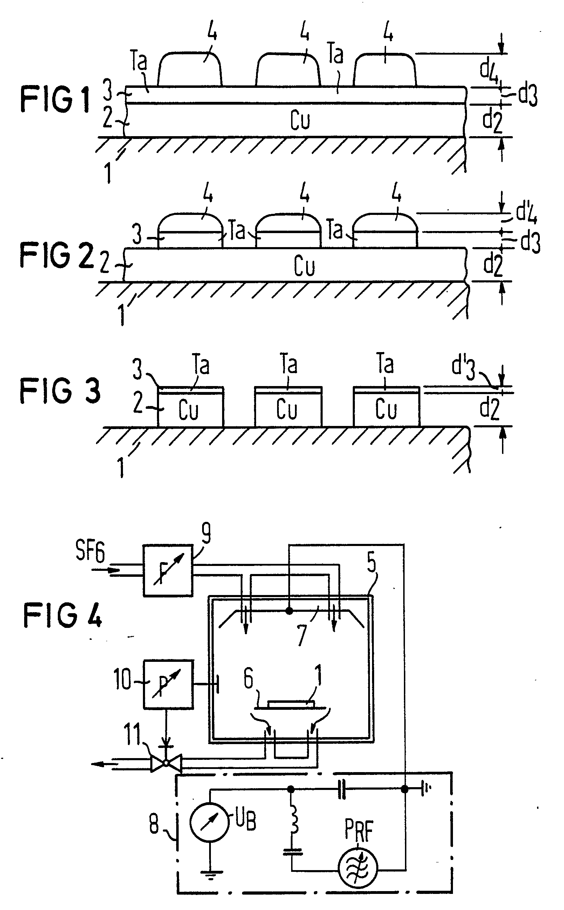

Ein erfindungsgemäß ausgebildetes Verfahren zum Strukturieren von Kupfer- und/oder Permalloyschichten geht, wie in FIG 1 schematisch dargestellt, von einem in konventioneller Technologie hergestellten Rohling aus. Dort ist als ein Ausführungsbeispiel der Erfindung auf einem Substrat 1 eine Kupferschicht 2 flächenhaft aufgebracht. Die Schichtdicke $d_2$ dieser Kupferschicht richtet sich dabei nach dem jeweiligen Anwendungsfall. Ebenso entsprechend dem jeweiligen Anwendungsfall soll diese Schicht durch Herauslösen einzelner Flächenbereiche strukturiert werden, so daß die stehend bleibende Struktur Leiterzüge auf Modulsubstraten und Schaltkarten, aber auch beispielsweise Windungen von Spulen bei Anwendungsfällen in der Dünnfilm-Magnetkopftechnologie bildet.

In vielen Fällen hat sich die Strukturierung von Kupferschichten auf rein fotolithografischem Wege bewährt. Im vorliegenden Fall ist aber besonders an Anwendungsfälle im Rahmen einer hochentwickelten Miniaturisierung mit sehr feinen Strukturen gedacht. Erschwerend kann dabei noch hinzukommen, daß die verwendeten Schichtdicken der leitfähigen Struktur dennoch relativ dick sind. In diesen Fällen genügt die konventionelle, vorzugsweise auf chemischem Ätzen mit Hilfe flüssiger Elektrolythen beruhende Herstellungsmethode insbesondere deswegen nicht, weil die Flanken von Leiterzügen bei freien Strukturen nicht ausreichend gleichmäßig und zudem häufig entweder nicht sauber herausgeätzt sind oder aber schon hinterätzt sind.

Im vorliegenden Fall wird daher mit einer metallischen Maske 3 gearbeitet, die über die Kupferschicht 2 gelegt ist. Diese Maske 3 besteht im vorliegenden Fall aus Tantal und weist eine Schichtdicke $d_3$ auf. Auf die Relation dieser Schichtdicke $d_3$ zu der Dicke $d_2$ der Kupferschicht 2 wird noch nachfolgend eingegangen.

Diese Maske 3 ist schließlich mit einer Fotolackschicht 4 abgedeckt. Diese ist in konventioneller Technologie ausgehärtet, nach einer vorgegebenen Struktur stellenweise belichtet, d. h. fixiert und anschließend wurden die nicht fixierten Flächenbereiche der Fotolackschicht 4 chemisch herausgelöst. Übrig bleibt eine Struktur, wie sie in FIG 1 schematisch dargestellt ist, bei der einzelne, mindestens teilweise voneinander getrennte Flächenbereiche der Fotolackschicht 4 stehen bleiben. Diese weisen eine gleichförmige Schichtdicke $d_4$ auf.

Das insoweit vorgefertigte Modulsubstrat ist in konventioneller Technologie hergestellt. Die in der Fotolackschicht 4 erzeugte Struktur soll nun nach der Methode des reaktiven Ionenätzens auf die Maske 3 übertragen werden. Diese Methode und Einrichtungen zur Durchführung dieses Trockenätzprozesses sind an sich bekannt. Deshalb ist eine derartige Einrichtung zum reaktiven Ionenätzen in FIG 4 auch nur im Prinzip dargestellt. In einer Ätzkammer 5 ist das Substrat 1 auf einem Aufnahmeteller 6 angeordnet. Dieser bildet zugleich eine Elektrode der Ätzeinrichtung. Die Gegenelektrode besteht aus einem über dem Aufnahmeteller 6 angeordneten metallischen Schirm 7. Beide Elektroden sind an jeweils einen von zwei Ausgängen eines RF-Generators 8 angeschlossen. Der Trockenätzprozeß läuft in einem Gasstrom ab, im vorliegenden Fall wird hierzu Schwefelhexafluorid $SF_6$ verwendet. Das verwendete Gas hat den großen Vorteil eines hohen Fluoranteils, das das wesentliche chemische Reagens darstellt. Damit ist die Voraussetzung für eine relativ kurze Ätzzeit geschaffen. Der Gasstrom, in dieser Technologie häufig als "Flow" bezeichnet, ist über einen Durchflußmengenmesser 9 einstellbar. Der Gasdruck in der Ätzkammer 5 wird über einen Druckmesser 10 gemessen und ist ebenfalls einstellbar. Dies geschieht dadurch, wie schematisch angedeutet, daß der vom Druckmesser 10 momentan gemessene Druck in der Ätzkammer 5 mit einem voreingestellten Wert verglichen wird und abhängig von dem Ergebnis dieses Vergleichs in einem Abflußkanal ein regelbares Ventil 11 betätigt wird.

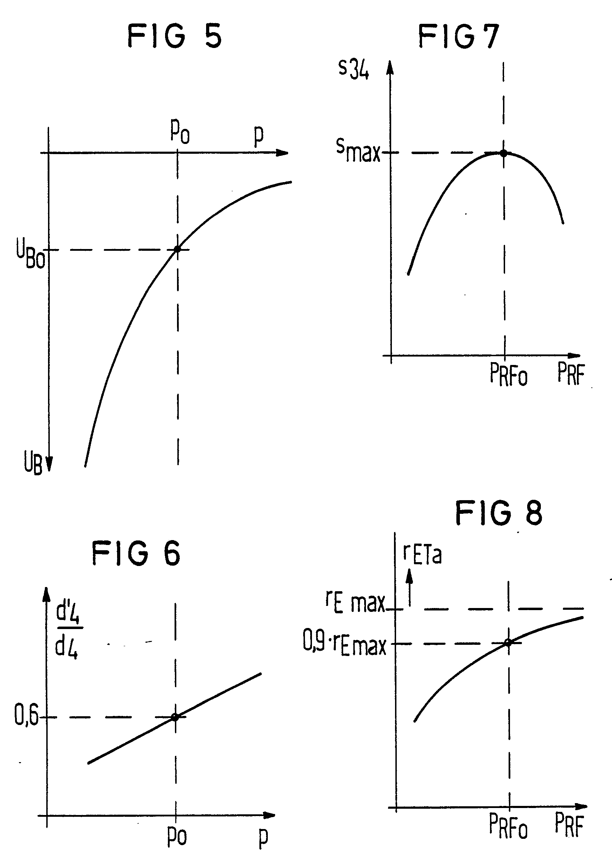

In FIG 4 ist schematisch angedeutet, daß der RF-Generator 8 mit einer Vorspannung $U_B$ betrieben wird, die in dieser Technologie häufig als Biasspannung bezeichnet wird. In FIG 5 ist in Form eines Diagrammes dargestellt, daß zwischen dem Druck p in der Ätzkammer 5 und dieser Vorspannung $U_B$ ein physikalischer Zusammenhang besteht. Niedriger Druck in der Ätzkammer hat eine hohe Vorspannung $U_B$ zur Folge, mit wachsendem Druck p nimmt diese Vorspannung exponentiell ab. Eine hohe Vorspannung des RF-Generators 8 bedingt eine hohe Ionenbeschleunigung in Richtung auf den Aufnahmeteller. Mit hoher Vorspannung ist also die physikalische Komponente des Trockenätzprozesses bevorzugt. Umgekehrt überwiegt bei niedriger Vorspannung $U_B$ die chemische Komponente des Ätzprozesses. In FIG 5 ist mit $p_0$ ein Druck bezeichnet, der etwa dem Übergangsbereich zwischen dem physikalischen und dem chemischen Ätzen zuzuordnen ist und daher Grenzdruck genannt wird. In bezug auf das in FIG 1 dargestellte Modulsubstrat wird bei einem reaktiven Ionenätzprozeß mit einem Druck $p < p_0$, also bei überwiegend physikalischer Komponente, die Fotolackschicht 4 stark angegriffen. Dagegen wird bei höheren Drücken, d. h. bei einem Druck $p > p_0$, also bei überwiegend chemischem Ätzen, die Maskenschicht 3 hinterätzt. Dies bedeutet, daß damit die gewünschte Flankensteilheit nicht erreicht wird.

Der Einfluß des Gasdruckes p in der Ätzkammer 5 auf die Fotolackschicht 4 ist in FIG 6 nochmals dargestellt. Mit $d'_4$ ist die Restschichtdicke der Fotolackschicht bezeichnet, d. h. diejenige Schichtdicke definiert, die nach dem reaktiven Ionenätzen übrigbleibt. Nach vorstehender Erläuterung ist deutlich, daß das Verhältnis der Restschichtdicke $d'_4$ zur ursprünglichen Schichtdicke $d_4$ der Fotolackschicht 4 mit wachsendem Gasdruck p zunimmt. Nach der vorliegenden technischen Lehre soll nun der Gasdruck p in der Ätzkammer 5 als Grenzdruck $p_0$ derart eingestellt werden, daß dieses Verhältnis etwa den Wert 0,6 beträgt. Damit ist einer der Betriebsparameter der Einrichtung zum reaktiven Ionenätzen festgelegt.

Allerdings ist das Abtragen der Fotolackschicht 4 nicht losgelöst von dem auf die Maskenschicht 3 einwirkenden Ätzprozeß zu betrachten. Für beide gibt es eine wiederum von der RF-Leistung $P_{RF}$ des RF-Generators 8 abhängige individuelle Ätzrate. Üblicherweise wird das Verhältnis der jeweiligen Ätzraten als Selektivität bezeichnet. Im vorliegenden Fall sei als Selektivität $s_{34}$ das Verhältnis der Ätzraten $r_E$ der Maskenschicht 3 zu der Fotolackschicht 4 bezeichnet. Auch für unterschiedliche Fotolacke läßt sich dieses Verhältnis in Abhängigkeit von der RF-Leistung empirisch ermitteln. Der Verlauf der Selektivität $s_{34}$ von Maskenschicht 3 aus Tantal zu Fotolackschicht 4 ist qualitativ in FIG 7 dargestellt. Die Selektivität $s_{34}$ erreicht bei einer bestimmten RF-Leistung, analog zur Bezeichnung des Grenzdruckes $p_0$ als Grenzleistung $P_{RFO}$ bezeichnet, ein Maximum $s_{max}$. Dies ist der gewünschte optimierte Wert, bei dem der Ätzprozeß in bezug auf die Maskenschicht 3 aus Tantal im Vergleich zur Fotolackschicht 4 möglichst günstig, d. h. auch zeitoptimiert abläuft. Damit ist der zweite Betriebsparameter ermittelt.

In FIG 8 ist zur Illustration noch der Verlauf der Ätzrate $r_{ETA}$ für Tantal in Abhängigkeit von der RF-Leistung $P_{RF}$ als Diagramm dargestellt. Die Kurve nähert sich asymptotisch mit wachsender RF-Leistung einer maximalen Ätzrate $r_{Emax}$. Für den gewählten optimierten Wert der RF-Leistung $P_{RFO}$ ergibt sich, daß damit etwa das 0,9fache dieser maximalen Ätzrate erreichbar ist.

Damit sind alle Betriebsparameter für einen optimierten Prozeß des reaktiven Ionenätzens nach der vorliegenden technischen Lehre bestimmt. Nunmehr zurückkehrend zu der Darstellung in FIG 1, machen vorstehende Erläuterungen zu diesem Prozeßschritt auch deutlich, wie das Verhältnis der Schichtdicken $d_3$ zu $d_4$ für diesen Anwendungsfall gewählt sein muß. Nach den Ausführungen über die Selektivität $s_{34}$ zwischen Tantal und Fotolack ergibt sich für die Schichtdicke $d_4$ der Fotolackschicht 4 die folgende Bedingung:

$$(1) \quad d_4 \geqq \frac{d_3}{s_{34}}.$$

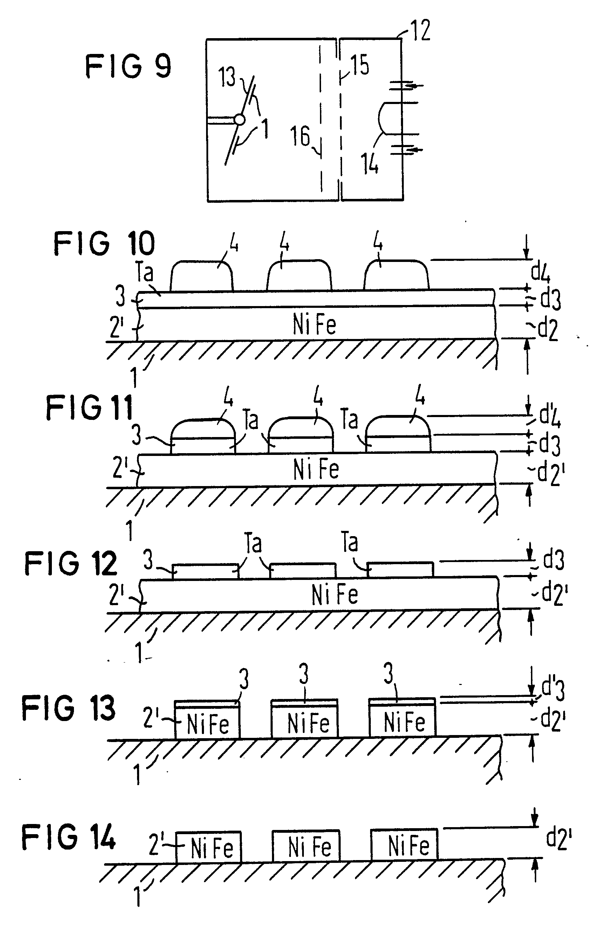

Wenn nun ein Modulsubstrat gemäß FIG 1 unter den beschriebenen Randbedingungen einem Prozeß des reaktiven Ionenätzens in einer Einrichtung entsprechend FIG 4 unterworfen wird, dann ergibt sich eine Struktur, die in FIG 2 dargestellt ist. Der Fotolack 4 ist bis auf eine Restschichtdicke $d'_4$ abgetragen und von der Maskenschicht 3 sind lediglich die abgedeckten Flächenbereiche erhalten. Somit ist die gewünschte Struktur auf die Maskenschicht 3 übertragen und die Kupferschicht 2 bis auf die abgedeckten Flächenbereiche freigelegt. Das Strukturieren der Kupferschicht unter Benutzung der Tantalmaske folgt nun nach der vorliegenden technischen Lehre durch Ionenstrahlätzen. An sich ist dieser Prozeß ein konventioneller Prozeß und dafür zu benutzende Ätzeinrichtungen sind als solche bekannt. Aus diesem Grund ist in FIG 9 auch lediglich schematisch eine Einrichtung zum Ionenstrahlätzen dargestellt. Wiederum ist in einer Ätzkammer 12 ein Aufnahmeteller 13 angeordnet, der im Betriebszustand rotiert und Substrate 1 trägt. Dem Aufnahmeteller gegenüberliegend ist in der Ätzkammer einer Kathode 14 vorgesehen. Zwischen der Kathode 14 und dem Aufnahmeteller 13 sind ein Gitter 15 und ein Neutralisator 16 festgelegt. Durch Zu- bzw. Abflußkanäle wird ein Ätzreagens ein- bzw. abgeleitet. Im vorliegenden Fall soll der Prozeßschritt des Ionenstrahlätzens nach völlig konventionellen Regeln in einer Argonatmosphäre ablaufen. Aus diesem Grunde erscheint es hier überflüssig, diesen Prozeßschritt noch im einzelnen näher zu erläutern.

In bezug auf das vorbereitete Modulsubstrat 1 gemäß der Darstellung von FIG 2 ist hier lediglich noch anzuführen, daß natürlich auch hier die Selektivität zwischen Tantal als dem Material für die Maskenschicht 3 und Kupfer als der eigentlich zu strukturierenden Schicht 2 zu berücksichtigen ist. Analog zu der Beziehung 1 gilt hier für die Dicke $d_3$ der Maskenschicht 3 die Beziehung:

$$(2) \quad d_3 \geqq \frac{d_2}{s_{23}},$$

wobei die Selektivität $s_{23}$ das Verhältnis der Ätzrate $r_{ECu}$ von Kupfer zur Ätzrate $r_{ETa}$ von Tantal unter den Betriebsbedingungen ist, die beim Prozeß des Ionenstrahlätzens festgelegt sind. Unter diesen Voraussetzungen ergibt sich für das in FIG 2 dar gestellte Modulsubstrat 1 nach dem Prozeß des Ionenstrahlätzens die in FIG 3 dargestellte Struktur. Diese zeigt auf dem Substrat 1 die fertig strukturierte Kupferschicht 2, die lediglich noch durch eine dünne Maske 3 mit der Restschichtdicke $d'_3$ abgedeckt ist.

Im vorstehenden wurde im einzelnen das Strukturieren einer Kupferschicht auf einem Substrat erläutert. In der Technologie für Dünnfilm-Magnetköpfe müssen aber neben solchen Kupferschichten auch Permalloyschichten strukturiert werden. Nach der vorliegenden technischen Lehre läßt sich dies in ähnlicher Weise wiederum mit einer Abfolge von Prozeßschritten aus reaktiven Ionenätzen und Ionenstrahlätzen erreichen. In ähnlicher Form wie in den FIG 1 bis 3, ist in den FIG 10 bis 14 ein solcher Ablauf für das Strukturieren einer Permalloyschicht schematisch dargestellt. FIG 10 zeigt, analog zu FIG 1, ein in konventioneller Technologie vorbereitetes Modulsubstrat mit einer Permalloyschicht $2'$ als der zu strukturierenden Schicht. Darüber ist wiederum eine Maske 3 aus Tantal aufgebracht, die ihrerseits durch eine bereits strukturierte Fotolackschicht 4 in einzelnen Flächenbereichen abgedeckt wird.

Für das Strukturieren dieser Permalloyschicht $2'$ gelten sinngemäß die für das Strukturieren der Kupferschicht 2 bereits ausführlich erläuterten Regeln, so daß hier auf eine detaillierte Beschreibung verzichtet werden kann. Zusammenfassend sei daher der Prozeßablauf anhand der FIG 10 bis 14 nur kurz skizziert. FIG 10 zeigt den Modulaufbau, analog zu FIG 1, nach der Fertigstellung der Struktur in der Fotolackschicht 4 und vor dem ersten, hier wesentlichen Prozeßschritt des reaktiven Ionenätzens. FIG 11 zeigt, analog zu FIG 2, den Modulaufbau nach dem reaktiven Ionenätzen, bei dem die Maskenschicht 3 strukturiert und die Permalloyschicht $2'$ teilweise freigelegt wird. FIG 12 illustriert einen anschließenden Zwischenschritt, bei dem die gebildete Maskenstruktur chemisch entschichtet wird, d. h. der noch verbliebene Rest des Fotolackes 4 abgetragen wird. Das Substrat ist damit für das Ionenstrahlätzen vorbereitet. In FIG 13 ist der Substrataufbau nach dem Ionenstrahlätzen gezeigt. Die Permalloyschicht $2'$ ist strukturiert und auf dieser Struktur ist lediglich eine dünne Restschicht der Maske 3 aus Tantal erhalten. Dieser Rest wird noch durch einen weiteren Prozeßschritt mit reaktivem Ionenätzen abgetragen. Danach bleibt allein die strukturierte Permalloyschicht 2' stehen, wie in FIG 14 gezeigt ist.

Das beschriebene Verfahren hat also fertigungstechnisch den Vorteil, daß für eine bestimmte Technologie, beispielsweise bei der Herstellung von Dünnfilm-Magnetköpfen zum Strukturieren zweier verschiedener Materialien, wie Kupfer und Permalloy im wesentlichen dieselben Verfahrensschritte bzw. Einrichtungen eingesetzt werden können. Darüber hinaus ergeben sich Strukturen mit den gewünschten Eigenschaften, insbesondere hoher Flankensteilheit und Gleichmäßigkeit des Kantenverlaufes. Dem Fachmann ist aus der vorstehenden Erläuterung von Ausführungsbeispielen der Erfindung verständlich, daß im Rahmen der vorliegenden technischen Lehre durchaus Ausgestaltungen möglich sind, die sich beispielsweise auf die Anpassung von Betriebsparametern bei den Ätzprozessen an bestimmte Anforderungen bei einzelnen Anwendungsfällen beziehen.

**Ansprüche**

1. Verfahren zum Strukturieren einer Kupferund/oder Permalloyschicht auf einer Substratoberfläche mittels Trockenätzen unter Verwendung einer metallischen, auf die zu strukturierende Schicht aufgebrachten Maske, die ihrerseits eine die Geometrie der Struktur wiedergebende Fotolackschicht trägt, **dadurch gekennzeichnet,** daß als Maske (3) eine Schicht aus Tantal auf die zu strukturierende Schicht (2, 2') aufgebracht wird, daß danach die Struktur der auf fotolithografischem Wege erzeugten Fotolackschicht (4) durch reaktives Ionenätzen auf die Maske übertragen und dieser Vorgang bis zum Freilegen der zu strukturierenden Kupfer- bzw. Permalloyschicht fortgesetzt wird und daß das Strukturieren dieser letzteren Schicht mittels Ionenstrahlätzen erfolgt.

2. Verfahren nach Anspruch 1, **dadurch gekennzeichnet,** daß die Maske (3) entsprechend der Selektivität ($s_{23}$), d. h. im Verhältnis der Ätzraten ($r_E$) des Materials (Cu bzw. NiFe) zu dem Material der Maske (Ta) mit einer derartigen Schichtdicke ($d_3$) aufgebracht wird, daß die Maskenschicht auch nach dem Ionenstrahlätzen noch nicht vollständig abgetragen ist.

3. Verfahren nach Anspruch 1 oder 2, **dadurch gekennzeichnet,** daß die Fotolackschicht (4) entsprechend der Selektivität ($s_{34}$) zwischen dem Material (Ta) der Maske (3) und dem Fotolack mit

einer Schichtdicke ($d_4$) aufgebracht wird, bei der die Fotolackschicht (4) selbst nach dem reaktiven Ionenätzen noch nicht vollständig abgetragen ist.

4. Verfahren nach einem der Ansprüche 1 bis 3, **dadurch gekennzeichnet,** daß Schwefelhexafluorid als Gas beim reaktiven Ionenätzen verwendet wird.

5. Verfahren nach einem der Ansprüche 1 bis 4, **dadurch gekennzeichnet,** daß das reaktive Ionenätzen bei einem Gasdruck ($p_O$) durchgeführt wird, der mit einer Vorspannung ($U_{BO}$) einer Einrichtung zum reaktiven Ionenätzen (5 bis 11) gekoppelt ist, die den Lackangriff, als das Verhältnis von Restschichtdicke ($d'_4$) nach dem Ätzvorgang zu der ursprünglichen Schichtdicke ($d_4$) der Fotolackschicht (4), auf einen Wert begrenzt, der über 0,5 liegt.

6. Verfahren nach Anspruch 5, **dadurch gekennzeichnet,** daß der Lackangriff auf den Wert von 0,6 begrenzt ist.

7. Verfahren nach einem der Ansprüche 1 bis 6, **dadurch gekennzeichnet,** daß zum reaktiven Ionenätzen die Prozeßgrößen für eine eingekoppelte RF-Leistung und eine Durchflußmenge des Gases derart eingestellt werden, daß sich eine Ätzrate für die Maskenschicht (3) einstellt, die der maximalen Ätzrate von Tantal nahekommt.

8. Verfahren nach Anspruch 7, **dadurch gekennzeichnet,** daß das reaktive Ionenätzen mit einer RF-Leistung ($P_{RFO}$) durchgeführt ist, aufgrund deren die davon abhängige Ätzrate des Maskenmaterials (Ta) dem 0,9fachen der maximalen Ätzrate entspricht.

9. Verfahren nach Anspruch 7 oder 8, **dadurch gekennzeichnet,** daß zum reaktiven Ionenätzen als Prozeßgröße für die eingekoppelte RF-Leistung derjenige Wert gewählt wird, bei dem die Selektivität zwischen dem Material (Ta) für die Maske (3) und der Fotolackschicht (4) ihren Maximalwert erreicht.

FIG 1

FIG 2

FIG 3

FIG 4

# FIG 5

# FIG 7

# FIG 6

# FIG 8

FIG 9

FIG 10

FIG 11

FIG 12

FIG 13

FIG 14

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | IBM TECHNICAL DISCLOSURE BULLETIN, Band 21, Nr. 10, März 1979, Seiten 4186-4187, New York, US; J. AHN et al.: "Method of tapering TaAuTa conductor cross section for improved magnetic bubble device performance" * Insgesamt * ----- | 1 | H 01 F 41/14 H 01 L 21/70 |
| | | | **RECHERCHIERTE SACHGEBIETE (Int. Cl.4)** |
| | | | H 01 F H 01 L H 05 K |

Der vorliegende Recherchenbericht wurde für alle Patentansprüche erstellt

| Recherchenort | Abschlußdatum der Recherche | Prüfer |
|---|---|---|
| DEN HAAG | 06-10-1988 | VITZTHUM N.A. |

EPO FORM 1503 03.82 (P0403)